# EUROPEAN PATENT APPLICATION

(11) **EP 4 648 413 A1**
(43) Date of publication of application: **12.11.2025**
(21) Application number: 24738672.5
(22) Date of filing: 02.01.2024
(51) Int. Cl.: H04N 19/29, H04N 19/30, H04N 19/70, H04N 19/169

(54) **ENCODING/DECODING METHOD AND APPARATUS, AND RECORDING MEDIUM STORING BITSTREAM**

(30) Priority: 03.01.2023 KR 20230000771
(71) Applicant: LG Electronics Inc., Yeongdeungpo-gu Seoul 07336 (KR)
(72) Inventor: KIM, Chulkeun, Seoul 06772 (KR); LIM, Jaehyun, Seoul 06772 (KR); GWAK, Donggyu, Seoul 06772 (KR)
(74) Representative: Mooser, Sebastian Thomas
(86) International application number: PCT/KR2024/000044
(87) International publication number: WO 2024/147601

(57) **Abstract**

Provided are an encoding/decoding method and apparatus, and a computer-readable recording medium generated by the encoding method. The decoding method according to the present disclosure is performed by the decoding apparatus, and comprises the steps of: obtaining, from a bitstream, optimization information for performing a task; and determining at least one of a type of the task, a latency characteristic of the task, or a frequency characteristic of information encoded in the bitstream, on the basis of the optimization information.

## Description

### [Technical Field]

The present disclosure relates to encoding/decoding method and apparatus, and more particularly, to encoding, configuration of a VCM bitstream or expression and encoding method of usage information.

### [Background Art]

Along with the development of machine learning technology, the demand for image processing-based artificial intelligence services is increasing. In order to effectively process a large amount of image data required for artificial intelligence services within limited resources, an image compression technology optimized for performing machine tasks is essential. However, since the existing image compression technologies have been developed with the goal of high-resolution and highquality image processing for human vision, there is a problem that they are not suitable for artificial intelligence services. Accordingly, research and development on new machine-oriented image compression technologies suitable for artificial intelligence services are actively being conducted.

### [Disclosure]

### [Technical Problem]

The present disclosure is to provide encoding/decoding methods and apparatuses with improved encoding/decoding efficiency.

The present disclosure is to provide encoding/decoding methods and apparatuses for optimization information.

The present disclosure is to provide encoding/decoding methods and apparatuses for a type of a task.

The present disclosure is to provide encoding/decoding methods and apparatuses for a latency characteristic of a task.

The present disclosure is to provide encoding/decoding methods and apparatuses for a frequency characteristic of information encoded in a bitstream.

The present disclosure is to provide a method of transmitting a bitstream generated by an encoding method or apparatus according to the present disclosure.

The present disclosure is to provide a recording medium storing a bitstream generated by an encoding method or apparatus according to the present disclosure.

The present disclosure is to provide a recording medium storing a bitstream received and decoded by a decoding apparatus according to the present disclosure and used for restoring a feature.

The technical problems to be achieved in the present disclosure are not limited to the technical problems described above, and other technical problems not described may be clearly understood by those of ordinary skill in the art from the following descriptions.

### [Technical Solution]

A decoding method according to an aspect of the present disclosure may be a decoding method performed by a decoding apparatus, including obtaining optimization information for performing a task from a bitstream, and determining at least one of a type of the task, a latency characteristic of the task, or a frequency characteristic of information encoded in the bitstream, based on the optimization information.

An encoding method according to another aspect of the present disclosure may be an encoding method performed by an encoding apparatus, including determining at least one of a type of a task, a latency characteristic of the task, or a frequency characteristic of information encoded in a bitstream, and encoding optimization information including a result of the determination into the bitstream.

A recording medium according to another aspect of the present disclosure may store a bitstream generated by the encoding method or the encoding apparatus of the present disclosure.

A bitstream transmission method according to another aspect of the present disclosure may transmit a bitstream generated by the encoding method or the encoding apparatus of the present disclosure to a decoding apparatus.

The features briefly summarized above for the present disclosure are merely an exemplary aspect of a detailed description of the present disclosure described below, and do not limit the scope of the present disclosure.

### [Advantageous Effects]

According to the present disclosure, encoding/decoding methods and apparatuses with improved encoding/decoding efficiency can be provided.

In addition, according to the present disclosure, it is possible to specify what a task is, or an optimization method applied to encoded information or a property of the information can be defined.

The effects obtainable from the present disclosure are not limited to the effects described above, and other effects not described may be clearly understood by those of ordinary skill in the art from the following descriptions.

### [Description of Drawings]

FIG. 1 is a diagram schematically showing a VCM system to which embodiments of the present disclosure may be applied.
FIG. 2 is a diagram schematically showing a VCM pipeline structure to which embodiments of the present disclosure may be applied.
FIG. 3 is a diagram schematically showing an image/video encoder to which embodiments of the present disclosure may be applied.
FIG. 4 is a diagram schematically showing an image/video decoder to which embodiments of the present disclosure may be applied.
FIG. 5 is a flowchart schematically showing a feature/feature map encoding procedure to which embodiments of the present disclosure may be applied.
FIG. 6 is a flowchart schematically showing a feature/feature map decoding procedure to which embodiments of the present disclosure may be applied.
FIG. 7 is a diagram illustrating an example of a VCM layer structure.
FIG. 8 is a diagram illustrating an example of the structure of a VCM bitstream.
FIG. 9 is a diagram illustrating an example of selection of a VCM bitstream or selection of an encoder structure according to usage.
FIG. 10 is a diagram illustrating an example of an NAL unit packet RTP payload format.
FIG. 11 is a diagram illustrating an example of a frequency threshold.
FIG. 12 to FIG. 23 are flowcharts illustrating encoding methods and decoding methods according to embodiments of the present disclosure.
FIG. 24 is a diagram showing an example of a content streaming system to which embodiments of the present disclosure may be applied.
FIG. 25 is a diagram showing another example of a content streaming system to which embodiments of the present disclosure may be applied.

### [Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

The present disclosure may be applied to a method disclosed in the Versatile Video Coding (VVC) standard and/or the Video Coding for Machines (VCM) standard. In addition, the present disclosure may be applied to a method disclosed in the essential video coding (EVC) standard, the AOMedia Video 1 (AV1) standard, the 2nd generation of audio video coding standard (AVS2) or the next-generation video/image coding standard (e.g., H.267 or H.268, etc.).

The present disclosure presents various embodiments related to video/image coding, and unless otherwise stated, the embodiments may be performed in combination with each other. In the present disclosure, "video" may refer to a set of images in sequence over time. "Image" may be information generated by artificial intelligence (AI). Input information used in a process in which AI performs a series of tasks, information generated in an information processing process and output information may be used as an image. In the present disclosure, "picture" generally refers to a unit representing a single image at a specific point in time and a slice/a tile is an encoding unit that constructs a part of a picture. One picture may be composed of at least one slice/tile. In addition, a slice/a tile may include at least one coding tree unit (CTU). The CTU may be partitioned into at least one CU. A tile is a rectangular area existing within a specific tile row and a specific tile column within a picture, and may be composed of a plurality of CTUs. A tile column may be defined as a rectangular area of CTUs, and may have the same height as the height of a picture and have a width specified by a syntax element signaled from a bitstream part such as a picture parameter set. A tile row may be defined as a rectangular area of CTUs, and may have the same width as the width of a picture and a height specified by a syntax element signaled from a bitstream part such as a picture parameter set. A tile scan is a predetermined sequential ordering method of CTUs that partition a picture. Here, CTUs may be sequentially ordered according to a CTU raster scan within a tile, and tiles within a picture may be sequentially ordered according to raster scan order of tiles in a picture. A slice may include an integer number of complete tiles or an integer number of sequential complete CTU rows within a tile of a picture. A slice may be included exclusively in a single NAL unit. One picture may be composed of at least one tile group. One tile group may include at least one tile. A brick may represent a rectangular area of CTU rows within a tile in a picture. A tile may include at least one brick. A brick may represent a rectangular area of CTU rows within a tile. One tile may be partitioned into a plurality of bricks, and each brick may include at least one CTU row belonging to a tile. A tile that is not partitioned into a plurality of bricks may also be treated as a brick.

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In an embodiment, especially when applied to VCM, a pixel/a pixel value may represent the pixel/pixel value of a component generated through the independent information or combination, synthesis and analysis of each component when there is a picture composed of a set of components with different characteristics and meaning. For example, in RGB input, it may represent only the pixel/pixel value of R, may represent only the pixel/pixel value of G, or may represent only the pixel/pixel value of B. For example, it may represent only the pixel/pixel value of a luma component synthesized by using R, G and B components. For example, it may represent only the pixel/pixel value of information or an image extracted through the analysis of R, G and B components.

In the present disclosure, "unit" may refer to a basic unit of image processing. A unit may include at least one of a specific area of a picture or information related to the area. One unit may include one luma block and two chroma (e.g., Cb, Cr) blocks. Depending on the context, the term "unit" may be used interchangeably with "sample array," "block," "area," etc. In general, an M×N block may include a set (or array) of samples (or a sample array) or a set (or array) of transform coefficients, consisting of M columns and N rows. In an embodiment, in particular, when it is applied to VCM, a unit may represent a basic unit including information for performing a specific task.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In addition, in the present disclosure, "current block" may refer to "luma block of current block" unless it is explicitly stated as a chroma block. "Chroma block of current block" may be expressed by explicitly including an explicit description of a chroma block such as "chroma block" or "current chroma block".

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

The present disclosure relates to video/image coding for machines (VCM).

VCM refers to a compression technology that encodes/decodes a part of a source image/video or information obtained from a source image/video for the purpose of machine vision. In VCM, an encoding/decoding target may be referred to as a feature. A feature may refer to information extracted from a source image/video based on a task purpose, a requirement, a neighboring environment, etc. A feature may have a different information form from a source image/video, and accordingly, a feature compression method and expression format may also be different from a video source.

VCM may be applied to various application fields. For example, in a surveillance system that recognizes and tracks objects or persons, VCM may be used to store or transmit object recognition information. In addition, in an intelligent transportation or smart traffic system, VCM may be used to transmit vehicle location information collected from GPS, sensing information collected from LIDAR, radar, etc. and various vehicle control information to other vehicles or infrastructure. In addition, in a smart city field, VCM may be used to perform the individual task of an interconnected sensor node or device.

The present disclosure provides various embodiments regarding feature/feature map coding. Unless otherwise specifically stated, embodiments of the present disclosure may be implemented individually or may be implemented in combination of at least two.

### Overview of VCM System

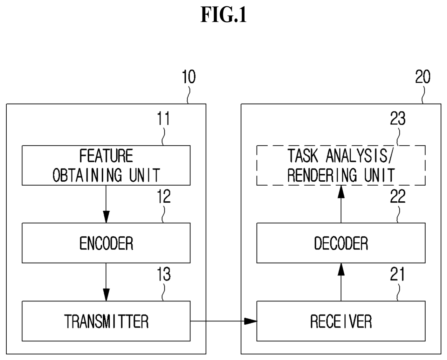

FIG. 1 is a diagram schematically showing a VCM system to which embodiments of the present disclosure may be applied.

Referring to FIG. 1, a VCM system may include an encoding apparatus 10 and a decoding apparatus 20.

An encoding apparatus 10 may compress/encode a feature/a feature map extracted from a source image/video to generate a bitstream, and transmit a generated bitstream to a decoding apparatus 20 through a storage medium or a network. An encoding apparatus 10 may also be referred to as a feature encoding apparatus. In a VCM system, a feature/a feature map may be generated in each hidden layer of a neural network. The size and number of channels of a generated feature map may vary depending on the type of a neural network or the location of a hidden layer. In the present disclosure, a feature map may be referred to as a feature set, and a feature or a feature map may be referred to as 'feature information'.

An encoding apparatus 10 may include a feature obtainer 11, an encoder 12 and a transmitter 13.

A feature obtainer 11 may obtain a feature/a feature map for a source image/video. According to an embodiment, a feature obtainer 11 may obtain a feature/a feature map from an external device, e.g., a feature extraction network. In this case, a feature obtainer 11 performs a feature reception interface function. Alternatively, a feature obtainer 11 may obtain a feature/a feature map by executing a neural network (e.g., CNN, DNN, etc.) by using a source image/video as an input. In this case, a feature obtainer 11 performs a feature extraction network function.

According to an embodiment, an encoding apparatus 10 may further include a source image generator (not shown) for obtaining a source image/video. A source image generator may be implemented by using an image sensor, a camera module, etc., and may obtain a source image/video through a process of capturing, synthesizing or generating an image/a video. In this case, a generated source image/video may be transmitted to a feature extraction network and used as input data for extracting a feature/a feature map.

An encoder 12 may encode a feature/a feature map obtained by a feature obtainer 11. An encoder 12 may perform a series of procedures such as prediction, transform, quantization, etc. to increase encoding efficiency. Encoded data (encoded feature/feature map information) may be output in the form of a bitstream. A bitstream including encoded feature/feature map information may be referred to as a VCM bitstream.

The transmitter 13 may obtain a feature/a feature map information or data output in the form of a bitstream, and may transmit the obtained information or data to a decoding apparatus 20 or another external object through a digital storage medium or a network in the form of a file or streaming. Here, the digital storage medium may include various storage medium such as USB, SD, CD, DVD, Blu-ray, HDD, SSD, etc. The transmitter 13 may include elements for generating a media file with a predetermined file format, or elements for transmitting data through a broadcasting/communication network. The transmitter 13 may be provided as a transmission device separate from the encoder 12, and in this case, the transmission device may include at least one processor for obtaining a feature/a feature map information or data output in the form of a bitstream, and a transmitter for transmitting it in the form of a file or streaming.

A decoding apparatus 20 may obtain feature/feature map information from an encoding apparatus 10 and reconstruct a feature/a feature map based on obtained information.

A decoding apparatus 20 may include a receiver 21 and a decoder 22.

A receiver 21 may receive a bitstream from an encoding apparatus 10 and obtain feature/feature map information from a received bitstream to transmit it to a decoder 22.

A decoder 22 may decode a feature/a feature map based on obtained feature/feature map information. A decoder 22 may perform a series of procedures such as dequantization, inverse transform, prediction, etc. corresponding to the operation of an encoder 14 to increase decoding efficiency.

According to an embodiment, a decoding apparatus 20 may further include a task analysis/rendering unit 23.

A task analysis/rendering unit 23 may perform task analysis based on a decoded feature/feature map. In addition, a task analysis/rendering unit 23 may render a decoded feature/feature map into a form suitable for performing a task. Based on a task analysis result and a rendered feature/feature map, various machine(-oriented) tasks may be performed.

Accordingly, a VCM system may encode/decode a feature extracted from a source image/video according to a user and/or machine request, a task purpose and a neighboring environment, and perform various machine(-oriented) tasks based on a decoded feature. A VCM system may also be implemented by extending/redesigning a video/image coding system, and may perform various encoding/decoding methods defined in the VCM standard.

### VCM Pipeline

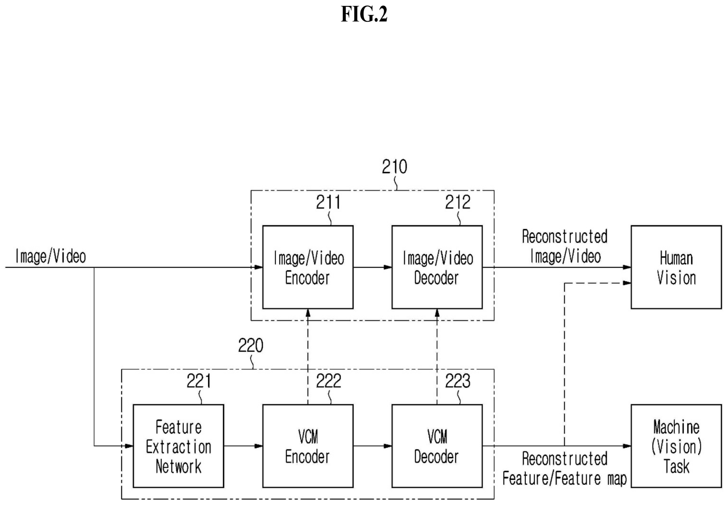

FIG. 2 is a diagram schematically showing a VCM pipeline structure to which embodiments of the present disclosure may be applied.

Referring to FIG. 2, a VCM pipeline 200 may include a first pipeline 210 for encoding/decoding an image/a video and a second pipeline 220 for encoding/decoding a feature/a feature map. In the present disclosure, a first pipeline 210 may be referred to as a video codec pipeline, and a second pipeline 220 may be referred to as a feature codec pipeline.

A first pipeline 210 may include a first stage 211 for encoding an input image/video and a second stage 212 for decoding an encoded image/video to generate a reconstructed image/video. A reconstructed image/video may be used for human viewing, i.e., human vision.

A second pipeline 220 may include a third stage 221 for extracting a feature/a feature map from an input image/video, a fourth stage 222 for encoding an extracted feature/feature map and a fifth stage 223 for decoding an encoded feature/feature map to generate a reconstructed feature/feature map. A reconstructed feature/feature map may be used for a machine (vision) task. Here, a machine (vision) task may refer to a task in which an image/a video is consumed by a machine. A machine (vision) task may be applied to a service scenario such as, for example, surveillance, intelligent transportation, smart city, intelligent industry, intelligent content, etc. According to an embodiment, a reconstructed feature/feature map may also be used for human vision.

According to an embodiment, a feature/a feature map encoded in a fourth stage 222 may be transmitted to a first stage 221 and used to encode an image/a video. In this case, an additional bitstream may be generated based on an encoded feature/feature map, and a generated additional bitstream may be transmitted to a second stage 222 and used to decode an image/a video.

According to an embodiment, a feature/a feature map decoded in a fifth stage 223 may be transmitted to a second stage 222 and used to decode an image/a video.

Although FIG. 2 shows a case in which a VCM pipeline 200 includes a first pipeline 210 and a second pipeline 220, this is just exemplary and the embodiments of the present disclosure are not limited thereto. For example, a VCM pipeline 200 may include only a second pipeline 220 or a second pipeline 220 may be extended to a plurality of feature codec pipelines.

Meanwhile, in a first pipeline 210, a first stage 211 may be performed by an image/video encoder, and a second stage 212 may be performed by an image/video decoder. In addition, in a second pipeline 220, a third stage 221 may be performed by a VCM encoder (or, a feature/feature map encoder), and a fourth stage 222 may be performed by a VCM decoder (or, a feature/feature map decoder). Hereinafter, an encoder/decoder structure is described in detail.

### Encoder

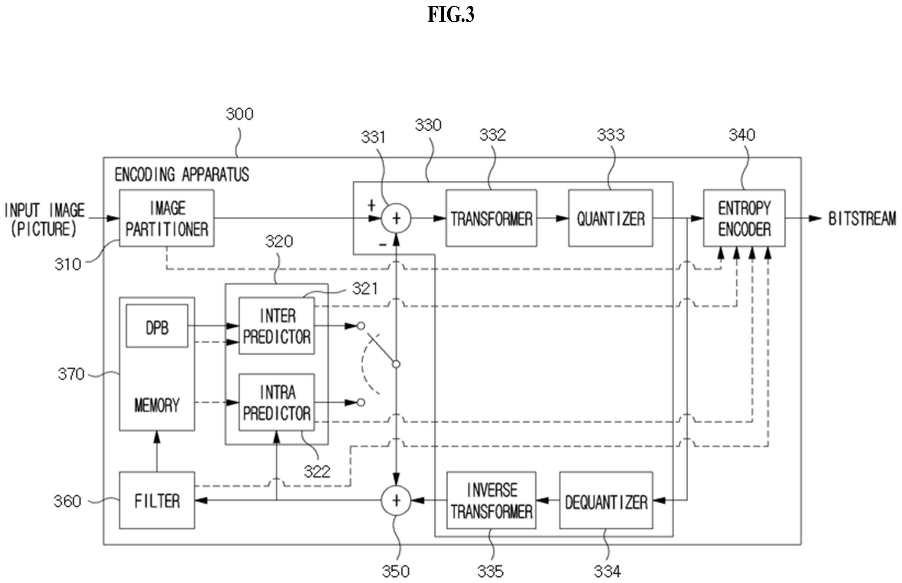

FIG. 3 is a diagram schematically showing an image/video encoder to which embodiments of the present disclosure may be applied.

Referring to FIG. 3, an image/video encoder 300 may include an image partitioner 310, a predictor 320, a residual processor 330, an entropy encoder 340, an adder 350, a filter 360 and a memory 370. A predictor 320 may include an inter predictor 321 and an intra predictor 322. A residual processor 330 may include a transformer 332, a quantizer 333, a dequantizer 334 and an inverse transformer 335. A residual processor 330 may further include a subtractor 331. An adder 350 may be referred to as a reconstructor or a reconstructed block generator. An image partitioner 310, a predictor 320, a residual processor 330, an entropy encoder 340, an adder 350 and a filter 360 described above may be configured by at least one hardware component (e.g., an encoder chipset or a processor) according to an embodiment. In addition, a memory 370 may include a decoded picture buffer (DPB) and may be configured by a digital storage medium. A hardware component described above may further include a memory 370 as an internal/external component.

An image partitioner 310 may partition an input image (or picture, frame) input to an image/video encoder 300 into at least one processing unit. As an example, a processing unit may be referred to as a coding unit (CU). A coding unit may be recursively partitioned from a coding tree unit (CTU) or a largest coding unit (LCU) according to a quad-tree binary-tree ternarytree (QTBTTT) structure. For example, one coding unit may be partitioned into a plurality of coding units of deeper depth based on a quad-tree structure, a binary-tree structure and/or a ternary structure. In this case, for example, a quad-tree structure may be applied first and a binary tree structure and/or a ternary structure may be applied later. Alternatively, a binary tree structure may be applied first. An image/video coding procedure according to the present disclosure may be performed based on a final coding unit that is no longer partitioned. In this case, the maximum coding unit may be used as a final coding unit based on coding efficiency according to image characteristics, etc. or if necessary, a coding unit may be recursively partitioned into coding units of deeper depth and a coding unit of an optimal size may be used as a final coding unit. Here, a coding procedure may include a procedure such as prediction, transform, reconstruction, etc. described later. As another example, a processing unit may further include a prediction unit (PU) or a transform unit (TU). In this case, a prediction unit and a transform unit may be divided or partitioned from a final coding unit described above, respectively. A prediction unit may be a unit of sample prediction, and a transform unit may be a unit for deriving a transform coefficient and/or a unit for deriving a residual signal from a transform coefficient.

A unit may be used interchangeably with a term such as a block, an area, etc. in some cases. In general, a MxN block may represent a set of transform coefficients or samples consisting of M columns and N rows. A sample may generally represent a pixel or a pixel value, or may represent only the pixel/pixel value of a luma component, or may represent only the pixel/pixel value of a chroma component. A sample may be used as a term corresponding to a pixel or a pel.

An image/video encoder 300 may generate a residual signal (a residual block, a residual sample array) by subtracting a prediction signal (a predicted block, a prediction sample array) output from an inter predictor 321 or an intra predictor 322 from an input image signal (an original block, an original sample array), and a generated residual signal is transmitted to a transformer 332. In this case, as shown, a unit that subtracts a prediction signal (a prediction block, a prediction sample array) from an input image signal (an original block, an original sample array) within an image/video encoder 300 may be referred to as a subtractor 331. A predictor may perform prediction on a block to be processed (hereinafter, referred to as a current block) and generate a predicted block including prediction samples for a current block. A predictor may determine whether intra prediction or inter prediction is applied in a unit of a current block or a CU. A predictor may generate various information related to prediction such as prediction mode information, etc. and transmit it to an entropy encoder 340. Prediction-related information may be encoded by an entropy encoder 340 and may be output in the form of a bitstream.

An intra predictor 322 may predict a current block by referring to samples within a current picture. In this case, referenced samples may be located in the neighboring area of a current block or may be located farther away according to a prediction mode. In intra prediction, prediction modes may include a plurality of non-directional modes and a plurality of directional modes. A non-directional mode may include, for example, a DC mode and a planar mode. A directional mode may include, for example, 33 directional prediction modes or 65 directional prediction modes according to the granularity of a prediction direction. However, this is an example, and a greater or fewer number of directional prediction modes may be used according to a configuration. An intra predictor 322 may also determine a prediction mode applied to a current block by using a prediction mode applied to a neighboring block.

An inter predictor 321 may derive a predicted block for a current block based on a reference block (a reference sample array) specified by a motion vector on a reference picture. In this case, in order to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on an inter prediction direction (L0 prediction, L1 prediction, Bi prediction, etc.). In inter prediction, neighboring block may include spatial neighboring block present within the current picture and temporal neighboring block present in the reference picture. A reference picture including a reference block and a reference picture including a temporal neighboring block may be the same or different. A temporal neighboring block may be referred to as a collocated reference block or a collocated CU (colCU), and a reference picture including a temporal neighboring block may be referred to as a collocated picture (colPic). For example, an inter predictor 321 may construct a motion information candidate list based on neighboring blocks and generate information indicating which candidate is used to derive the motion vector and/or reference picture index of a current block. Inter prediction may be performed based on various prediction modes, and for example, in a skip mode and a merge mode, an inter predictor 321 may use the motion information of a neighboring block as the motion information of a current block. In a skip mode, unlike a merge mode, a residual signal may not be transmitted. In a motion vector prediction (MVP) mode, the motion vector of a neighboring block may be used as a motion vector predictor, and the motion vector of a current block may be indicated by signaling a motion vector difference.

A predictor 320 may generate a prediction signal based on various prediction methods. For example, a predictor may apply intra prediction or inter prediction for prediction for one block, and may also apply both intra prediction and inter prediction simultaneously. It may be referred to as combined inter and intra prediction (CIIP). In addition, a predictor may be based on an intra block copy (IBC) prediction mode or a palette mode for prediction for a block. An IBC prediction mode or a palette mode may be used for content image/video coding, for example, such as screen content coding (SCC), etc. IBC basically performs prediction within the current picture, but since it derives a reference block within the current picture, it may operate similarly to inter prediction. In other words, IBC may use at least one of the inter prediction methods described in the present disclosure. A palette mode may be considered as an example of intra coding or intra prediction. When a palette mode is applied, a sample value within a picture may be signaled based on information related to a palette table and a palette index.

A prediction signal generated by a predictor 320 may be used to generate a reconstructed signal or to generate a residual signal. A transformer 332 may generate transform coefficients by applying a transform method to a residual signal. For example, a transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. In addition, a transform process may be applied to a pixel block of the same square size or to a non-square variable-sized block.

A quantizer 333 may quantize transform coefficients and transmit them to an entropy encoder 340, and an entropy encoder 340 may encode a quantized signal (information on quantized transform coefficients) and output it as a bitstream. Information on quantized transform coefficients may be referred to as residual information. A quantizer 333 may reorder blockshaped quantized transform coefficients in the form of a one-dimensional vector based on a coefficient scan order, and may generate information on quantized transform coefficients based on quantized transform coefficients in the form of a one-dimensional vector. An entropy encoder 340 may perform various encoding methods such as exponential Golomb, context-adaptive variable length coding (CAVLC), context-adaptive binary arithmetic coding (CABAC), etc. An entropy encoder 340 may encode not only quantized transform coefficients but also information necessary for video/image reconstruction (e.g., the value of syntax elements, etc.) together or separately. Encoded information (E.G., encoded video/image information) may be transmitted or stored in the form of a bitstream in a network abstraction layer (NAL) unit. Image/video information may further include information on various parameter sets such as an adaptation parameter set (APS), a picture parameter set (PPS), a sequence parameter set (SPS) or a video parameter set (VPS), etc. In addition, video/image information may further include general constraint information. In addition, image/video information may further include a method for generating and using encoded information, a purpose thereof, etc. In the present disclosure, information and/or syntax elements transmitted/signaled from an image/video encoder to an image/video decoder may be included in image/video information. Image/video information may be encoded through an encoding procedure described above and included in a bitstream. A bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting and/or a storage unit (not shown) for storing a signal output from an entropy encoder 340 may be constructed as an internal/external element of an image/video encoder 300 or a transmitter may be included in an entropy encoder 340.

The quantized transform coefficients output from a quantizer 333 may be used to generate a prediction signal. For example, a residual signal (a residual block or residual samples) may be reconstructed by applying dequantization and inverse transform to quantized transform coefficients through a dequantizer 334 and an inverse transformer 335. An adder 350 may generate a reconstructed signal (a reconstructed picture, a reconstructed block, a reconstructed sample array) by adding a reconstructed residual signal to a prediction signal output from an inter predictor 321 or an intra predictor 322. When there is no residual for a processing target block, such as when a skip mode is applied, a predicted block may be used as a reconstructed block. An adder 350 may be referred to as a reconstructor or a reconstructed block generator. A generated reconstructed signal may be used for intra prediction of the next processing target block within a current picture and, as described later, may also be used for inter prediction of the next picture through filtering.

Meanwhile, luma mapping with chroma scaling may be applied in a picture encoding and/or reconstruction process.

A filter 360 may apply filtering to a reconstructed signal to enhance subjective/objective image quality. For example, a filter 360 may apply various filtering methods to a reconstructed picture to generate a modified reconstructed picture, and may store a modified reconstructed picture in a memory 370, specifically in the DPB of a memory 370. Various filtering methods may include, for example, deblocking filtering, a sample adaptive offset, an adaptive loop filter, a bilateral filter, etc. A filter 360 may generate various filtering-related information and transmit it to an entropy encoder 340. The filtering-related information may be encoded by an entropy encoder 340 and output in the form of a bitstream.

A modified reconstructed picture transmitted to a memory 370 may be used as a reference picture in an inter predictor 321. Through this, it may avoid prediction mismatch on an encoder side and a decoder side and may improve encoding efficiency.

The DPB of a memory 370 may store a modified reconstructed picture for use as a reference picture in an inter predictor 321. A memory 370 may store the motion information of a block where motion information within a current picture is derived (or, encoded) and/or the motion information of blocks within an already reconstructed picture. The stored motion information may be transmitted to an inter predictor 321 for use as motion information of a spatial neighboring block or a temporal neighboring block. A memory 370 may store the reconstructed samples of reconstructed blocks in a current picture and transmit stored reconstructed samples to an intra predictor 322.

Meanwhile, a VCM encoder (or a feature/feature map encoder) may have a structure identical/similar to an image/video encoder 300 basically described by referring to FIG. 3 in that it performs a series of procedures such as prediction, transform, quantization, etc. to encode a feature/a feature map. However, a VCM encoder is different from an image/video encoder 300 in that it targets a feature/a feature map for encoding, and accordingly, it may be different in the name of each unit (or, component) (e.g., an image partitioner 310, etc.) and its specific operation details from an image/video encoder 300. The specific operation details of a VCM encoder will be described in detail later.

### Decoder

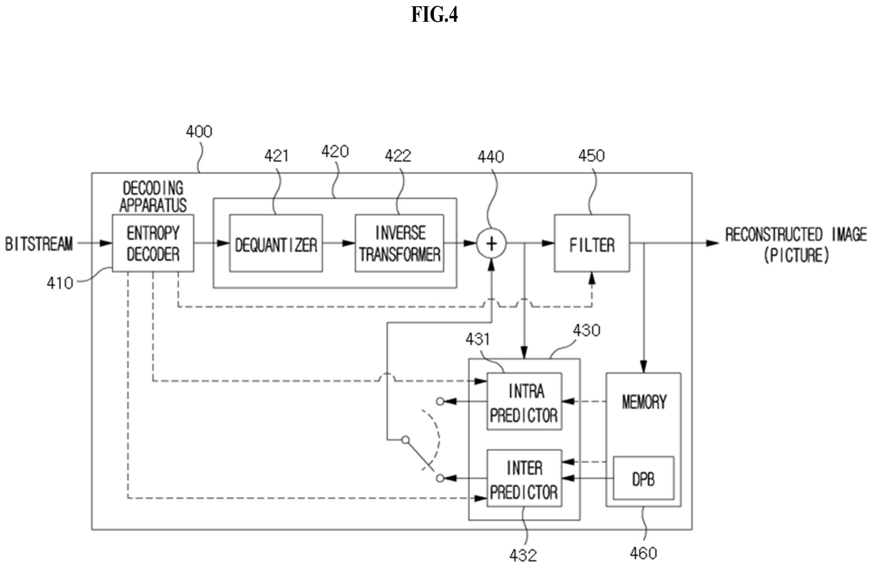

FIG. 4 is a diagram schematically showing an image/video decoder to which embodiments of the present disclosure may be applied.

Referring to FIG. 4, an image/video decoder 400 may include an entropy decoder 410, a residual processor 420, a predictor 430, an adder 440, a filter 450 and a memoery 460. A predictor 430 may include an inter predictor 431 and an intra predictor 432. A residual processor 420 may include a dequantizer 421 and an inverse transformer 422. An entropy decoder 410, a residual processor 420, a predictor 430, an adder 440 and a filter 450 described above may be configured by one hardware component (e.g., a decoder chipset or a processor) according to an embodiment. In addition, a memory 460 may include a decoded picture buffer (DPB) and may be configured by a digital storage medium. A hardware component may further include a memory 460 as an internal/external component.

When a bitstream including video/image information is input, an image/video decoder 400 may reconstruct an image/a video in response to a process in which image/video information is processed in an image/video encoder 300 of FIG. 3. For example, an image/video decoder 400 may derive units/blocks based on block partition-related information obtained from a bitstream. An image/video decoder 400 may perform decoding by using a processing unit applied in an image/video encoder. Accordingly, the processing unit of decoding may be, for example, a coding unit, and a coding unit may be partitioned according to a quad tree structure, a binary tree structure and/or a ternary tree structure from a coding tree unit or a largest coding unit. At least one transform unit may be derived from a coding unit. And, a reconstructed image signal decoded and output through an image/video decoder 400 may be played back through a playback device.

An image/video decoder 400 may receive a signal output from an encoder in FIG. 3 in the form of a bitstream, and a received signal may be decoded through an entropy decoder 410. For example, an entropy decoder 410 may parse a bitstream to derive information necessary for image reconstruction (or picture reconstruction) (e.g., video/image information). The video/image information may further include information on various parameter sets such as an adaptation parameter set (APS), a picture parameter set (PPS), a sequence parameter set (SPS), a video parameter set (VPS), etc. In addition, the video/image information may further include general constraint information. In addition, the image/video information may include the generation method, use method, purpose, etc. of decoded information. An image/video decoder 400 may decode a picture further based on information on a parameter set and/or general constraint information. The signaled/received information and/or syntax elements may be decoded through a decoding procedure and obtained from a bitstream. For example, an entropy decoder 410 may decode information in a bitstream based on a coding method such as exponential Golomb encoding, CAVLC, or CABAC, etc. and may output the values of a syntax element necessary for image reconstruction and quantized values of a transform coefficient related to a residual. More specifically, a CABAC entropy decoding method may receive a bin corresponding to each syntax element in a bitstream, determine a context model by using the information of a decoding target syntax element, the decoding information of neighboring and decoding target blocks or the information of a symbol/a bin decoded in a previous step, and predict the probability of bin occurrence according to a determined context model and perform arithmetic decoding of a bin to generate a symbol corresponding to the value of each syntax element. In this case, a CABAC entropy decoding method may update a context model by using the information of a decoded symbol/bin for the context model of the next symbol/bin after determining a context model. Among the information decoded by an entropy decoder 410, prediction-related information may be provided to a predictor (an inter predictor 432 and an intra predictor 431), and a residual value which is entropy decoded by an entropy decoder 410, i.e., quantized transform coefficients and related parameter information, may be input to a residual processor 420. A residual processor 420 may derive a residual signal (a residual block, residual samples, a residual sample array). In addition, among the information decoded by an entropy decoder 410, filtering-related information may be provided to a filter 450. Meanwhile, a receiver (not shown) that receives a signal output from an image/video encoder may be additionally constructed as an internal/external element of an image/video decoder 400 or a receiver may be a component of an entropy decoder 410. Meanwhile, an image/video decoder according to the present disclosure may also be referred to as an image/video decoding apparatus, and an image/video decoder may be divided into an information decoder (an image/video information decoder) and/or a sample decoder (an image/video sample decoder). In this case, an information decoder may include an entropy decoder 410, and a sample decoder may include at least one of a dequantizer 321, an inverse transformer 322, an adder 440, a filter 450, a memory 460, an inter predictor 432 and an intra predictor 431.

A dequantizer 421 may dequantize quantized transform coefficients and output transform coefficients. A dequantizer 421 may reorder quantized transform coefficients in the form of a two-dimensional block. In this case, reordering may be performed based on the coefficient scan order performed in an image/video encoder. A dequantizer 321 may perform dequantization on quantized transform coefficients by using a quantization parameter (i.e., quantization step size information), and may obtain transform coefficients.

An inverse transformer 422 may perform an inverse transform on transform coefficients to obtain a residual signal (a residual block, a residual sample array).

A predictor 430 may perform prediction for a current block and generate a predicted block that includes prediction samples for a current block. A predictor may determine whether intra prediction or inter prediction is applied to a current block based on prediction-related information output from an entropy decoder 410 and may determine a specific intra/inter prediction mode (prediction method).

A predictor 420 may generate a prediction signal based on various prediction methods. For example, a predictor may apply not only intra prediction or inter prediction, but also intra prediction and inter prediction at the same time for prediction for one block. This may be called combined inter and intra prediction (CIIP). In addition, a predictor may be based on an intra block copy (IBC) prediction mode or a palette mode for prediction for a block. An IBC prediction mode or a palette mode may be used for content image/video coding of game such as screen content coding (SCC), etc. IBC basically performs prediction within a current picture, but it may be performed similarly to inter prediction in that it derives a reference block within a current picture. In other words, IBC may use at least one of the inter prediction techniques described in this document. A palette mode may be considered as an example of intra coding or intra prediction. When a palette mode is applied, information related to a palette table and a palette index may be included in image/video information and signaled.

An intra predictor 431 may predict a current block by referring to samples within a current picture. Referenced samples may be located in the neighborhood of a current block or may be located away from a current block according to a prediction mode. In intra prediction, prediction modes may include a plurality of non-directional modes and a plurality of directional modes. An intra predictor 431 may determine a prediction mode applied to a current block by using a prediction mode applied to a neighboring block.

An inter predictor 432 may derive a predicted block for a current block based on a reference block (a reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. Motion information may include a motion vector and a reference picture index. Motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, an inter predictor 432 may construct a motion information candidate list based on neighboring blocks and derive the motion vector and/or reference picture index of a current block based on received candidate selection information. Inter prediction may be performed based on various prediction modes, and prediction-related information may include information indicating an inter prediction mode for a current block.

An adder 440 may generate a reconstructed signal (a reconstructed picture, a reconstructed block, a reconstructed sample array) by adding an obtained residual signal to a prediction signal (a predicted block, a prediction sample array) output from a predictor (including an inter predictor 432 and/or an intra predictor 431). When there is no residual for a processing target block, such as when a skip mode is applied, a predicted block may be used as a reconstructed block.

An adder 440 may be referred to as a reconstructor or a reconstructed block generator. A generated reconstructed signal may be used for intra prediction of the next processing target block within a current picture, or as described later, may be output through filtering, or may be used for inter prediction of the next picture.

Meanwhile, luma mapping with chroma scaling may be applied in a picture decoding process.

A filter 450 may apply filtering to a reconstructed signal to enhance subjective/objective image quality. For example, a filter 450 may apply various filtering methods to a reconstructed picture to generate a modified reconstructed picture, and may transmit a modified reconstructed picture to a memory 460, specifically to the DPB of a memory 460. Various filtering methods may include, for example, deblocking filtering, a sample adaptive offset, an adaptive loop filter, a bilateral filter, etc.

A (modified) reconstructed picture stored in the DPB of a memory 460 may be used as a reference picture in an inter predictor 432. A memory 460 may store the motion information of a block where motion information within a current picture is derived (or decoded) and/or the motion information of blocks in an already reconstructed picture. The stored motion information may be transmitted to an inter predictor 432 to be used as motion information of a spatial neighboring block or a temporal neighboring block. A memory 460 may store the reconstructed samples of reconstructed blocks in a current picture and transmit them to an intra predictor 431.

Meanwhile, a VCM decoder (or, a feature/feature map decoder) may have a structure identical/similar to an image/video decoder 400 basically described above by referring to FIG. 4 in that it performs a series of procedures such as prediction, inverse transform, dequantization, etc. to decode a feature/a feature map. However, a VCM decoder is different from an image/video decoder 400 in that it targets a feature/a feature map for decoding, and accordingly, it may be different in the name of each unit (or, component) (e.g., DPB, etc.) and its specific operation details from an image/video decoder 400. The operation of a VCM decoder may correspond to the operation of a VCM encoder, and its specific operation details will be described in detail later.

### Feature/Feature Map Encoding Procedure

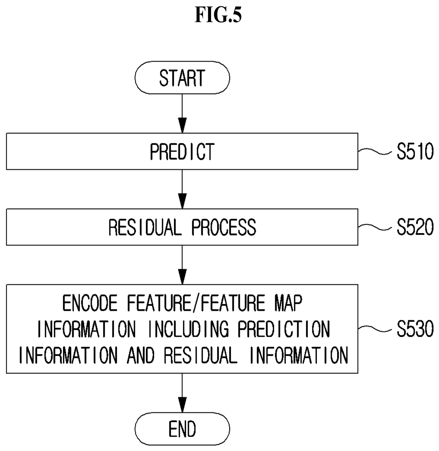

FIG. 5 is a flowchart schematically showing a feature/feature map encoding procedure to which embodiments of the present disclosure may be applied.

Referring to FIG. 5, a feature/feature map encoding procedure may include a prediction procedure S510, a residual processing procedure S520 and an information encoding procedure S530.

A prediction procedure S510 may be performed by a predictor 320 described above by referring to FIG. 3.

Specifically, an intra predictor 322 may predict a current block (i.e., a set of feature elements to be currently encoded) by referring to feature elements in a current feature/feature map. Intra prediction may be performed based on the spatial similarity of feature elements configuring a feature/a feature map. For example, feature elements included in the same region of interest (RoI) within an image/a video may be estimated to have similar data distribution characteristics. Accordingly, an intra predictor 322 may predict a current block by referring to pre-reconstructed feature elements within a region of interest including a current block. In this case, referenced feature elements may be located adjacent to a current block or may be located apart from a current block according to a prediction mode. Intra prediction modes for feature/feature map encoding may include a plurality of non-directional prediction modes and a plurality of directional prediction modes. The non-directional prediction modes may include, for example, prediction modes corresponding to the DC mode and planar mode of an image/video encoding procedure. In addition, directional modes may include, for example, prediction modes corresponding to 33 directional modes or 65 directional modes of an image/video encoding procedure. However, this is just an example, and the type and number of intra prediction modes may be configured/changed in various ways according to an embodiment

An inter predictor 321 may predict a current block based on a reference block (i.e., a set of referenced feature elements) specified by motion information on a reference feature/feature map. Inter prediction may be performed based on the temporal similarity of feature elements configuring a feature/a feature map. For example, temporally continuous features may have similar data distribution characteristics. Accordingly, an inter predictor 321 may predict a current block by referring to pre-reconstructed feature elements of a current feature and a temporally adjacent feature. In this case, motion information for specifying referenced feature elements may include a motion vector and a reference feature/feature map index. Motion information may further include information related to an inter prediction direction (e.g., L0 prediction, L1 prediction, Bi prediction, etc.). For inter prediction, a neighboring block may include a spatial neighboring block existing in a current feature/feature map and a temporal neighboring block existing in a reference feature/feature map. A reference feature/feature map including a reference block and a reference feature/feature map including a temporal neighboring block may be the same or different. A temporal neighboring block may be referred to as a collocated reference block, etc., and a reference feature/feature map including a temporal neighboring block may be referred to as a collocated feature/feature map. An inter predictor 321 may configure a motion information candidate list based on neighboring blocks and generate information indicating which candidate is used to derive the motion vector and/or reference feature/feature map index of a current block. Inter prediction may be performed based on various prediction modes, and for example, for a skip mode and a merge mode, an inter predictor 321 may use the motion information of a neighboring block as the motion information of a current block. For a skip mode, unlike a merge mode, a residual signal may not be transmitted. For a motion vector prediction (MVP) mode, the motion vector of a neighboring block may be used as a motion vector predictor, and the motion vector of a current block may be indicated by signaling a motion vector difference. A predictor 320 may generate a prediction signal based on various prediction methods in addition to intra prediction and inter prediction described above.

A prediction signal generated by a predictor 320 may be used to generate a residual signal (a residual block, residual feature elements) S520. A residual processing procedure S520 may be performed by a residual processor 330 described above by referring to FIG. 3. And, (quantized) transform coefficients may be generated through a transform and/or quantization procedure for a residual signal, and an entropy encoder 340 may encode information related to (quantized) transform coefficients as residual information in a bitstream S530. In addition, an entropy encoder 340 may encode information necessary for feature/feature map reconstruction, e.g., prediction information (e.g., prediction mode information, motion information, etc.) in addition to residual information in a bitstream.

Meanwhile, a feature/feature map encoding procedure may further include a procedure for generating a reconstructed feature/feature map for a current feature/feature map and a procedure (optional) for applying in-loop filtering to a reconstructed feature/feature map as well as a procedure S530 for encoding information for feature/feature map reconstruction (e.g., prediction information, residual information, partitioning information, etc.) and outputting it in the form of a bitstream.

A VCM encoder may derive (modified) residual feature(s) from quantized transform coefficient(s) through dequantization and inverse transform, and may generate a reconstructed feature/feature map based on prediction feature(s) and (modified) residual feature(s) which are the output of S510. A reconstructed feature/feature map generated in this way may be the same as a reconstructed feature/feature map generated by a VCM decoder. When an in-loop filtering procedure is performed on a reconstructed feature/feature map, a modified reconstructed feature/feature map may be generated through an in-loop filtering procedure on a reconstructed feature/feature map. A modified reconstructed feature/feature map may be stored in a decoded feature buffer (DFB) or a memory and then, used as a reference feature/feature map in the prediction procedure of a feature/feature map. In addition, (in-loop) filtering-related information (parameter) may be encoded and output in the form of a bitstream. Through an in-loop filtering procedure, noise that may occur during feature/feature map coding may be removed, and feature/feature map-based task performance may be improved. In addition, an in-loop filtering procedure may be performed both on an encoder side and a decoder side to guarantee the identity of prediction result, improve the reliability of feature/feature map coding and reduce the amount of data transmission for feature/feature map coding.

### Feature/Feature Map Decoding Procedure

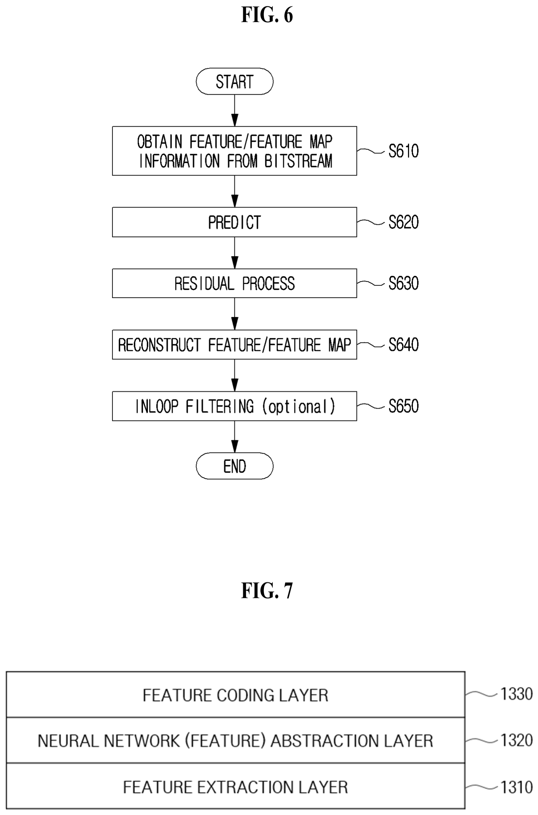

FIG. 6 is a flowchart schematically showing a feature/feature map decoding procedure to which embodiments of the present disclosure may be applied.

Referring to FIG. 6, a feature/feature map decoding procedure may include an image/video information acquisition procedure S610, a feature/feature map reconstruction procedure S620 to S640 and an in-loop filtering procedure S650 for a reconstructed feature/feature map. A feature/feature map reconstruction procedure may be performed based on a prediction signal and a residual signal obtained through the process of inter/intra prediction S620, residual processing S630 and dequantization and inverse transform for a quantized transform coefficient described in the present disclosure. A modified reconstructed feature/feature map may be generated through an in-loop filtering procedure for a reconstructed feature/feature map, and a modified reconstructed feature/feature map may be output as a decoded feature/feature map. A decoded feature/feature map may be stored in a decoded feature buffer (DFB) or a memory and then, used as a reference feature/feature map in an inter prediction procedure when decoding a feature/a feature map. In some cases, the above-described in-loop filtering procedure may be omitted. In this case, a reconstructed feature/feature map may be output as a decoded feature/feature map as it is, and may be stored in a decoded feature buffer (DFB) or a memory and then, used as a reference feature/feature map in an inter prediction procedure when decoding a feature/a feature map.

### Example of Coding Layer and Structure

FIG. 7 is a diagram illustrating an example of a VCM layer structure.

Referring to FIG. 7, the VCM layer structure may include a feature extraction layer 1310, a neural network (feature) abstraction layer 1320, and a feature coding layer 1330.

The feature extraction layer 1310 may refer to a layer for extracting a feature from an input source and may also include the result of the extraction. The feature coding layer 1330 may refer to a layer for compressing the extracted feature and may also include the result of the compression.

The neural network abstraction layer 1320 may abstract information generated from the feature extraction layer 1310 (e.g., information on extracted feature/feature map) and transmit it to the feature coding layer 1330. The neural network abstraction layer 1320 may conceal the internal structure of the feature extraction layer 1310 and provide a consistent feature interface function through the abstraction of the information. Accordingly, even when the compression target changes due to tool (e.g., CNN, DNN, etc.) changes, the feature coding layer 1330 may perform a consistent feature coding procedure. In the present disclosure, the neural network abstraction layer (NNAL) may also be referred to as a feature abstraction layer.

An interface between the feature extraction layer 1310 and the neural network abstraction layer 1320, and an interface between the feature coding layer 1330 and the neural network abstraction layer 1320 may be predefined, and operations in the neural network abstraction layer 1320 may be configured to be modifiable later.

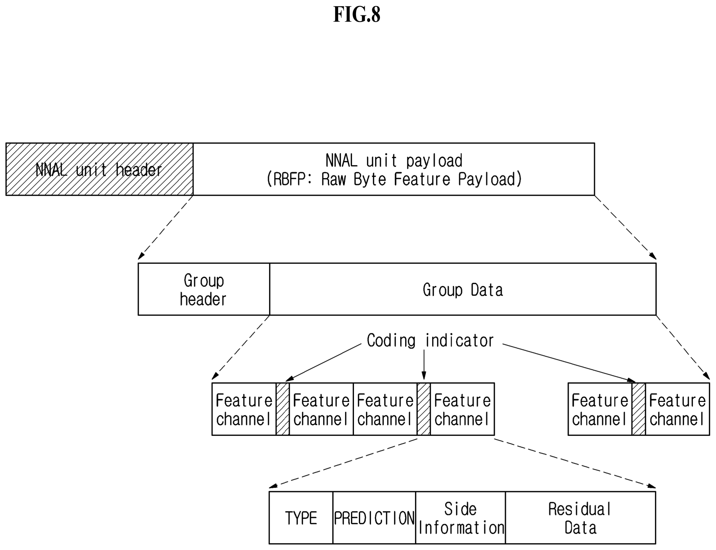

FIG. 8 is a diagram illustrating an example of a VCM bitstream composed of an encoded abstracted feature and NNAL information.

The bitstream configured as shown in FIG. 8 may be referred to as a neural network abstraction layer (NNAL) unit. The NNAL unit may be an independent feature reconstruction unit. Input features for a single NNAL unit may be extracted from the same layer within a neural network. Accordingly, input features for a single NNAL unit may be forced to have the same characteristics. For example, the same feature extraction method may be applied to the input features for a single NNAL unit.

An NNAL unit may include an NNAL unit header and an NNAL unit payload. The NNAL unit header may include all information necessary to utilize an encoded feature for a task. The NNAL unit payload may include abstracted feature information. The NNAL unit payload may include a group header and group data. The group header may include configuration information of feature group data, such as a temporal order, number, or common property of feature channels constituting the feature group. A feature channel may refer to a unit of an encoded feature. The group data may include a plurality of feature channels and coding indicators, and each feature channel may include type information, prediction information, side information, and residual information. In this case, the type information may indicate an encoding method, and the prediction information may indicate a prediction method. Additionally, the side information may indicate additional information required for decoding (e.g., entropy coding, quantization related information, etc.), and the residual information may include information on encoded feature elements (i.e., a set of feature value information).

### Embodiments

The embodiments described in the present disclosure relate to encoding, configuration of a VCM bitstream or expression and encoding method of usage information. Such information may be defined in the abstraction layer 1320. The necessity of encoding of a VCM bitstream, representing and encoding/decoding of configuration or usage information of a VCM bitstream is as described below.

### 1. To select a bitstream or structure suitable for the purpose of a machine (VCM decoder)

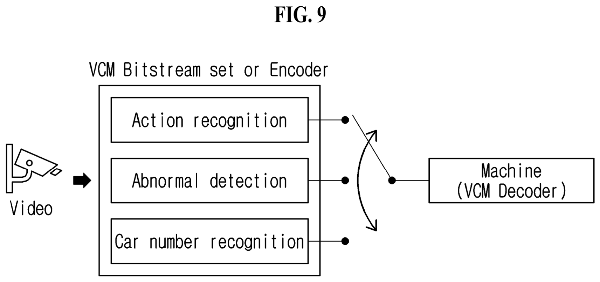

The purpose of VCM is to perform a machine task, and therefore the compression method used in the encoding process may be defined according to the type of machine task being targeted. A user (machine) should be able to request an encoded VCM bitstream or an encoding structure suitable for the characteristics of the task to be performed. FIG. 9 illustrates an example of selection of a VCM bitstream or an encoder structure according to usage. In FIG. 9, Action recognition, Abnormal detection, and Car number recognition indicates examples of a type or a structure of a machine task to be performed. A VCM encoder may encode an image acquired from a camera, etc. according to a predefined machine task or an encoder configuration set to generate a VCM bitstream set, or may encode using a structure suitable for the purpose of the machine (VCM decoder).

### 2. For efficient transmission

For transmission of a VCM bitstream, configuration of a transmission unit of the VCM bitstream (e.g., packet based network) may be required. To transmit the configured transmission unit (e.g., packet) based on purpose and importance, the transmission unit should include purpose and importance information, etc. For example, RFC 6184 (RTP Payload Format for H.264 Video), which is a standard for transmission of H.264, uses H.264 NAL (network abstraction layer) information when configuring a transmission unit to include the type of information contained in the bitstream that constitutes the transmission unit in the header information. Since VCM aims to perform machine task, the importance and purpose of an encoded VCM bitstream are probable to be more diverse than in conventional video compression standards such as H.264, H.265, VVC, etc. For example, the transmission speed and transmission reliability requirements of a VCM bitstream for autonomous driving and a VCM bitstream for license plate recognition in a parking lot may differ. To include purpose and importance information in transmission unit configuration, the VCM bitstream shall include encoding structure or usage information in a layer that serves as an interface with external systems (e.g., the abstraction layer).

The present disclosure proposes various embodiments to satisfy the above-described needs. The embodiments described in the present disclosure may operate independently or in combination.

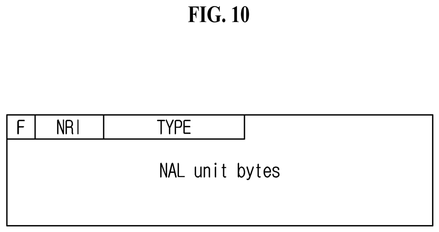

The embodiments described in the present disclosure relate to methods for defining and representing propertys of a bitstream necessary for selecting a VCM bitstream and encoding/decoding method suitable for a task to be performed by a user (machine). FIG. 10 illustrates an example of a NAL unit packet RTP payload format. In FIG. 10, F is a 1-bit forbidden_zero_bit, where a value of 0 may indicate no error and no syntax violation, and a value of 1 may indicate an error or syntax violation. NRI is a 2-bit nal_ref_idx, where a value of 00 may indicate that it is not used as a reference image, and values of 01, 10, and 11 may indicate that it is used as a reference image. Type is a 5-bit nal_unit_type, which may indicate a payload type of the NAL unit. The header information of a NAL unit may be inserted in the form of a payload header of an RTP format header. In other words, the NAL unit header information may serve as the RTP payload header information. Therefore, to identify the purpose (e.g., type of machine task) and characteristics of information containing a packet for the machine, corresponding information should be defined in the NAL unit header.

A method of defining purpose and property of a NAL unit header may include a method of defining an executable machine task and a method of defining a property of information. These two methods may perform similar functions depending on the implementation. For example, when the type of executable machine task is defined, the property of the contained information may also be derived therefrom, since requirements for the compressed information (e.g., latency, quality, bit rate, data range, etc.) are defined according to the type of machine task. Similarly, when properties of the information (e.g., latency, quality, bit rate, data range, etc.) are defined in the NAL unit header, the types of executable machine tasks may also be derived.

Table 1 to Table 3 illustrate examples of a method for defining executable machine task, and Table 4 illustrates an example of identifier information for a machine task.

**[Table 1]**

| | |
|---|---|
| machine_optimization_info( ) { | **Descriptor** |
| **num_tasks** | u(3) |
| for( i = 0; i < num_tasks; i+- ) { | |
| **task_id**[ i ] | u(3) |
| } | |
| ... | |
| } | |

**[Table 2]**

| | |
|---|---|
| machine_optimization_info( ) { | **Descriptor** |
| **optimized_for_machine_flag** | u(1) |
| if(optimized_for_machine_flag){ | |
| **num**_**tasks** | u(3) |
| for( i = 0; i < num_tasks; i+- ) { | |
| **task_id**[ i ] | u(3) |
| } | |
| ... | |
| } | |

**[Table 3]**

| | |
|---|---|
| machine_optimization_info { | **Descriptor** |
| ... | |
| **optimized_for _machine_flag** | u(1) |
| ... | |
| } | |

**[Table 4]**

| task_id | Task |
|---|---|
| 0 | Object detection |
| 1 | Object tracking |
| 2 | Face recognition |
| 3 | Motion detection |
| 4 | Automated guided vehicle |
| 5 | autonomous vehicle |
| ... | ... |

The machine_optimization_info may correspond to information on a type of executable machine task. The machine_optimization_info may be referred to as "optimization information". The machine_optimization_info may include num_tasks and task_id. The num_tasks and task_id may be referred to as "type information" or "information on a type".

The num_tasks may indicate the total number of executable machine tasks. The task to be performed by the receiver (VCM decoder) may be one or more. Therefore, after the num_tasks is transmitted, identification information may be encoded.

The task_id is an identifier for a task and may be referred to as "identification information". As shown in Table 4, a type and characteristic of an executable task may be defined for each task_id. For example, when the value of task_id is 0, Object detection may be identified, and when the value of task_id is 1, Object tracking may be identified. The task types defined for each task_id in Table 4 are merely an example, and the values and ranges may vary.

The optimized_for_machine_flag may indicate whether optimization is performed for a task and may be referred to as an "optimization flag." A value of 1 for the optimized_for_machine_flag may indicate that the subsequent NAL unit byte is encoded using an optimization method for a machine task. A value of 0 for the optimized_for_machine_flag may indicate that the subsequent NAL unit byte is not encoded using an optimization method for a machine task. The optimized_for_machine_flag may be used when a change is required in the middle of a service or a bitstream. As shown in the example of Table 1, the optimized_for_machine_flag may not be defined, and in such a case, a value of 0 for num_tasks may indicate that no optimization is performed for a machine task. As shown in the example of Table 2, type information such as num_tasks and task_id may be defined only when the value of the optimized_for_machine_flag is 1. As shown in the example of Table 3, only information on whether optimization is performed may be defined, without defining information on the type of an executable machine task.

Meanwhile, the optimization information may include property information. The property information may include at least one of latency characteristic (latency information) of a task, or spatial characteristic (spatial information) of information encoded in the bitstream. The spatial characteristic may include frequency characteristic (frequency information) of the encoded information. Table 5 illustrates an example of property information defined by the optimization information according to the present disclosure.

**[Table 5]**

| Information | Description |
|---|---|
| latency_level | Indicates the priority of encoded information, may be used to determine transmission delay or reliability level, and a larger value indicates a higher priority (e.g., 0: high latency +45 sec., 1: low latency 1-5 sec., 2: very low latency 200 ms-1 sec., 3: real-time) |
| max_latency | Indicates the maximum allowable transmission delay (e.g., 10ms, 100ms, 200ms, etc.) |
| activity_level | Indicates the spatial characteristic of the encoded information (e.g., complexity, whether high or low frequency information is passed, etc.) (e.g., 0: low pass filter, 1: band pass filter, 2: high pass filter) |
| low_activity_threshold | Indicates Threshold B, which is a reference value for low activity, used to define a cut-off threshold of activity_level. |
| high_activity_threshold | Indicates Threshold A, which is a reference value for high activity, used to define a cut-off threshold of activity_level. |

The latency_level and max_latency are information indicating a latency characteristic and may be referred to as "information on a latency level". The max_latency may be referred to as "maximum latency information", and the latency_level may be referred to as "latency level information". The latency characteristic of a task may be determined based on the latency_level and max_latency. The activity_level, low_activity_threshold, and high_activity_threshold are information indicating a spatial characteristic and may be referred to as "spatial information" or "frequency information". The low_activity_threshold may be referred to as "lower threshold frequency information", the high_activity_threshold may be referred to as "higher threshold frequency information", and the activity_level may be referred to as "frequency level information".

The machine_optimization_info, which is a set of encoded information, may be configured by combining only a subset of the defined property information, or it may be defined using all of the defined property information.

Table 6 to Table 8 illustrate examples of configurations of property information.

**[Table 6]**

| | |
|---|---|
| machine_optimization_info ( ) { | **Descriptor** |
| | |
| **latency_level** | u(4) |
| **activity_level** | u(4) |
| ... | |
| } | |

**[Table 7]**

| | |
|---|---|
| machine_optimization_info ( ) { | **Descriptor** |
| | |
| **latency_level** | u(4) |
| **max_latency_flag** | u(1) |
| if(max_latency_flag){ | |
| **max_latency** | u(4) |
| } | |
| **activity_level** | u(4) |
| **activity_range_flag** | u(1) |
| if(activity_range){ | |
| **low_activity_threshold** | u(4) |
| **high_activity_threshold** | u(4) |
| } | |
| ... | |
| } | |

**[Table 8]**

| | |
|---|---|
| machine_optimization_info ( ) { | **Descriptor** |
| | |
| **latency_level** | u(4) |
| **max_latency_flag** | u(1) |
| if(max_latency_flag){ | |
| **max_latency** | u(4) |
| } | |
| **activity_level** | u(4) |
| **activity_range_flag** | u(1) |
| if(activity_range_flag){ | |
| if(activity_level =0){ | |
| **high_activity_threshold** | u(4) |
| }else if(activity_level ==1){ | |
| **low_activity_threshold** | u(4) |
| **high_activity_threshold** | u(4) |
| }else { | |
| **low_activity_threshold** | u(4) |
| } | |
| } | |
| ... | |
| } | |

Table 6 illustrates an example in which the machine_optimization_info is configured using only latency_level and activity_level, and Table 7 and Table 8 illustrate examples in which max_latency, low_activity_threshold, and high_activity_threshold are added to configure the machine_optimization_info. The example in Table 6 may be used when the predefined levels of latency_level and activity_level satisfy the service requirements, and the examples in Table 7 and Table 8 may be used when the predefined latency_level and activity_level alone do not satisfy the service requirements. The examples in Table 7 and Table 8 are configured such that max_latency, high_activity_threshold, or low_activity_threshold are signaled according to the value of max_latency_flag and the value of activity_range_flag, which is to express latency_level and activity_level in a more precise manner. In the example of Table 8, whether to encode high_activity_threshold and low_activity_threshold may be determined based on the value of activity_level.

A value of 1 for max_latency_flag may indicate that max_latency is defined, and a value of 0 for max_latency_flag may indicate that max_latency is not defined.

A value of 1 for activity_range_flag may indicate that cut off threshold information is defined (e.g., some or all of high_activity_threshold, low_activity_threshold, or max_latency are defined), and a value of 0 for activity_range_flag may indicate that cut off threshold information is not defined.

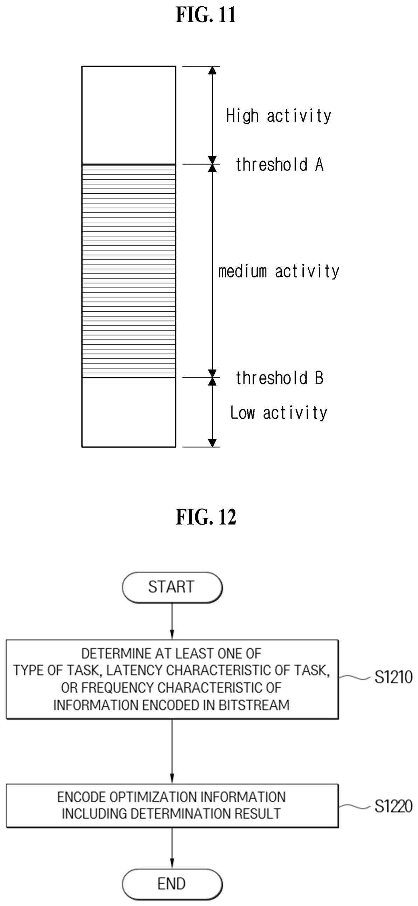

FIG. 11 illustrates an example of high_activity_threshold and low_activity_threshold, which are cut off thresholds. Depending on the type of machine task, there may be cases where high activity information is important in the encoding target, and cases where low activity information is important. Additionally, there may be cases where medium activity information is important. A filter for identifying spatial characteristics (e.g., a high pass filter, a low pass filter, or a band pass filter) may be used to determine the high activity level and low activity level of the encoding target. An encoding method that minimizes information loss in the area that have the activity level required for the machine task in the encoding target may be applied. A user or decoding apparatus may determine whether the bitstream is suitable for a target machine task using latency_level, low_activity_threshold, or high_activity_threshold.

Hereinafter, methods for signaling optimization information (machine_optimization_info) will be described.

The optimization information may be configured (signaled) using the following three methods.
1. A method of extending and applying an NAL unit
2. A method of defining a new (dedicated) NAL unit type for machine_optimization_info
3. A method of extending and applying supplemental enhancement information (SEI)

The first method, i.e., extending and applying an (existing) NAL unit, refers to adding machine_optimization_info to an NAL unit type. Table 9 illustrates an example of encoding (signaling) machine_optimization_info through an extension of SPS, and Table 10 illustrates an example of encoding (signaling) machine_optimization_info through PPS. Table 11 illustrates an example of a NAL unit type, in which SPS_NUT, a NAL unit type for SPS, is defined as 15, and PPS_NUT, a NAL unit type for PPS, is defined as 16. In such a case, machine_optimization_info may be signaled using SPS_NUT and PPS_NUT,

**[Table 9]**

| | |
|---|---|
| seq_parameter_set_rbsp( ) { | **Descriptor** |
| ... | |
| sps_machine_task_info_flag | u(1) |
| if(sps_machine_task_info_flag ) { | |
| machine_optimization_info( ) | |
| } | |
| ... | |
| } | |

**[Table 10]**

| | |
|---|---|
| picture_parameter_set_rbsp( ) { | **Descriptor** |
| ... | |
| pps_machine_task_info_flag | u(1) |
| if(pps_machine_task_info_flag ) { | |
| machine_optimization_info ( ) | |
| } | |
| ... | |
| } | |

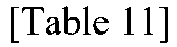

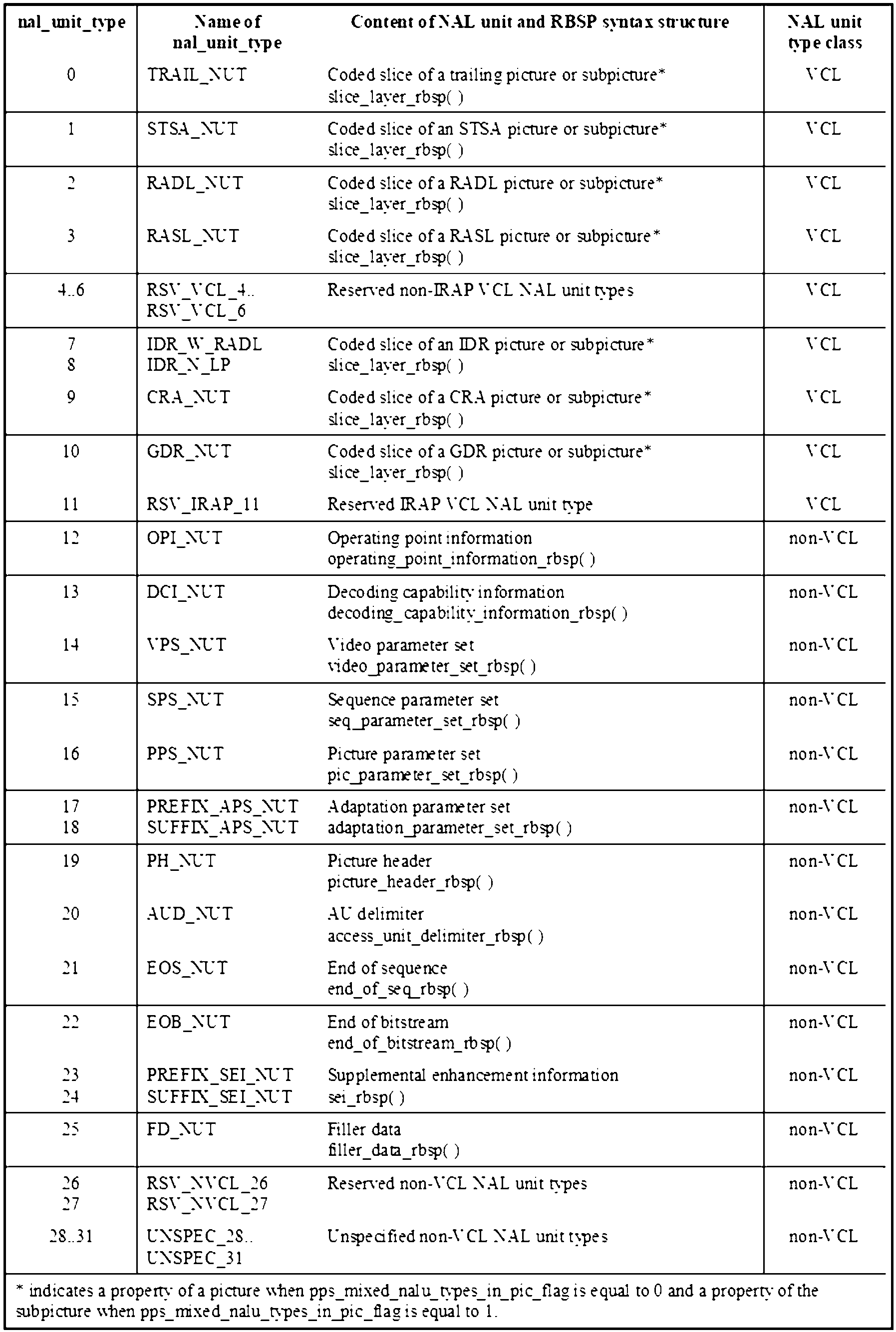

A value of 1 for sps_machin_task_info_flag may indicate that machine_optimization_info is defined in the SPS, and a value of 0 for sps_machin_task_info_flag may indicate that machine_optimization_info is not defined in the SPS.

A value of 1 for pps_machin_task_info_flag may indicate that machine_optimization_info is defined in the PPS, and a value of 0 for pps_machin_task_info_flag may indicate that machine_optimization_info is not defined in the PPS.

The second method is to define a new (dedicated) NAL unit type for machine_optimization_info. Table 12 illustrates an example of a dedicated NAL unit type for machine_optimization_info. As shown in the example of Table 13, extension information for future use (moi_extension_flag, moi_extension_data_flag) may be signaled together with the information described in Table 1 to Table 3 and Table 6 to Table 8.

**[Table 12]**

| **nal_unit_type** | **Name of nal_unit_type** | **Content of NAL unit and RBSP syntax structure** | **NAL unit type class** |
|---|---|---|---|
| 26 | MOI_NUT | Machine optimization information | Non-VCL |
| | | machine_optimization_info() | |

**[Table 13]**

| | |
|---|---|
| machine_optimization_info ( ) { | Descriptor |
| .... | |
| **moi_extension_flag** | u(1) |
| if( moi_extension_flag ) | |
| while( more_rbsp_data( ) ) | |
| **moi_extension_data_flag** | u(1) |
| rbsp_trailing_bits( ) | |
| } | |

A value of 0 for moi_extension_flag may indicate that moi_extension_data_flag does not exist, and a value of 1 for moi_extension_flag may indicate that moi_extension_data_flag exists. The moi_extension_flag may be intended for cases where additional task and optimization related information needs to be defined.

A value of 1 for moi_extension_data_flag may indicate that additional information on a type of an executable task and optimization exists, and a value of 0 for moi_extension_data_flag may indicate that additional information on a type of an executable task and optimization does not exist. The moi_extension_data_flag may correspond to information for future extensibility.

The third method is to encode machine_optimization_info using an SEI message. In the example of Table 11, PREFIX_SEI_NUT and SUFFIX_SEI_NUT, which are NAL unit types for SEI, are defined as 23 and 24, respectively. Table 14 illustrates an example of encoding machine_optimization_info using SEI.

**[Table 14]**

| | |
|---|---|
| sei_payload( payloadType, payloadSize ) { | **Descriptor** |
| if( nal_unit_type = = PREFIX_SEI_NUT ) | |
| if( payloadType = = 0) | |
| ... | |
| else if( payloadType = = 204 ) * Specified in Rec. ITU-T H.274 \| ISO IEC 23002-7 */ | |
| sample_aspect_ratio_info( payloadSize ) | |
| else if( payloadType = = 205 ) | |
| machine_optimization_info ( payloadSize ) | |
| else * Specified in Rec. ITU-T H.274 ISO/IEC 23002-7 * | |
| reserved_message( payloadSize ) | |
| else * nal_unit_type = = SUFFIX_SEI_NUT */ | |
| ... | |
| if( more_data_in_payload( ) ) { | |
| ... | |
| } | |
| } | |

When a payload type (payloadType) of SEI is a predetermined value (e.g., 205), it may indicate that an SEI payload representing machine_optimization_info is encoded. However, payloadType == 205 is merely an example, and the predetermined value for indicating that an SEI payload is encoded may be set to any arbitrary number.

### Encoding and Decoding Methods

The following describes encoding and decoding methods for performing various embodiments of the present disclosure.

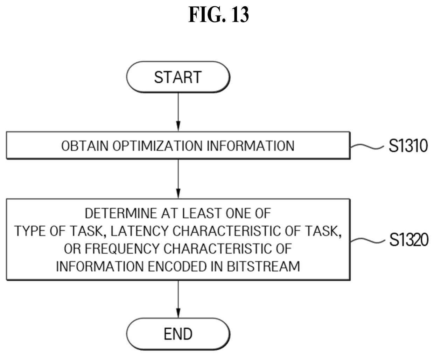

FIG. 12 illustrates an encoding method for encoding optimization information, and FIG. 13 illustrates a decoding method for decoding optimization information.

Referring to FIG. 12, at least one of a type of a task, a latency characteristic of the task, or a property of information encoded in a bitstream (e.g., spatial characteristic or frequency characteristic) may be determined S1210. Optimization information (machine_optimization_info) including the result determined in step S1210 may be encoded into the bitstream S1220.

Referring to FIG. 13, optimization information may be obtained from a bitstream S1310, and based on the obtained optimization information, at least one of a type of a task, a latency characteristic of the task, or a property of information encoded in the bitstream may be determined S1320.

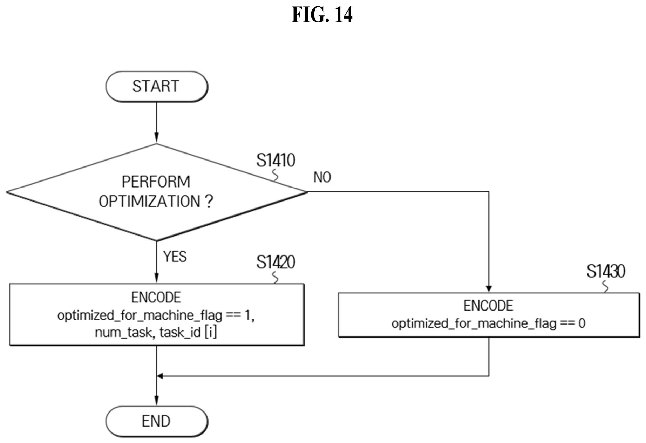

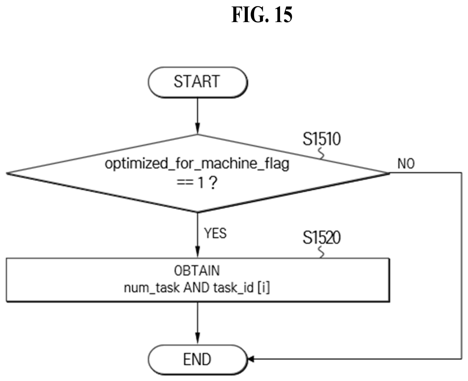

FIG. 14 illustrates an encoding method for encoding information about a type of a task, and FIG. 15 illustrates a decoding method for determining a type of a task.

Referring to FIG. 14, the optimization information may encode identification information for a task (task_id) S1420. The identification information for the task may be encoded for a number of times corresponding to the number (i) indicated by the number information of tasks (num_tasks). In other words, the optimization information may be encoded including the number information of tasks and the identification information.

According to embodiments, an optimization flag (optimized_for_machine_flag) indicating whether optimization for the task has been performed may be further included in the optimization information and encoded. In this example, whether the optimization has been performed is first determined S1410, and when optimization has been performed, optimized_for_machine_flag == 1, num_tasks, and task_id may be encoded S1420, and when optimization has not been performed, optimized_for_machine_flag == 1 may be encoded S1430.

Referring to FIG. 15, identification information (task_id) may be obtained from a bitstream S1520. The identification information may be obtained in a number indicated by task number information (num_tasks). In other words, after the number information is obtained, task_id may be obtained in the number indicated by the number information S1520. The type of task may be determined as a type indicated by the identification information among type candidates of task.

According to embodiments, an optimization flag (optimized_for_machine_flag) may be obtained from the bitstream, and whether optimization has been performed may be determined based on a value of the optimization flag S1510. In this example, when optimization has been performed, num_tasks and task_id may be obtained S1520, and when optimization has not been performed, num_tasks and task_id may not be obtained.

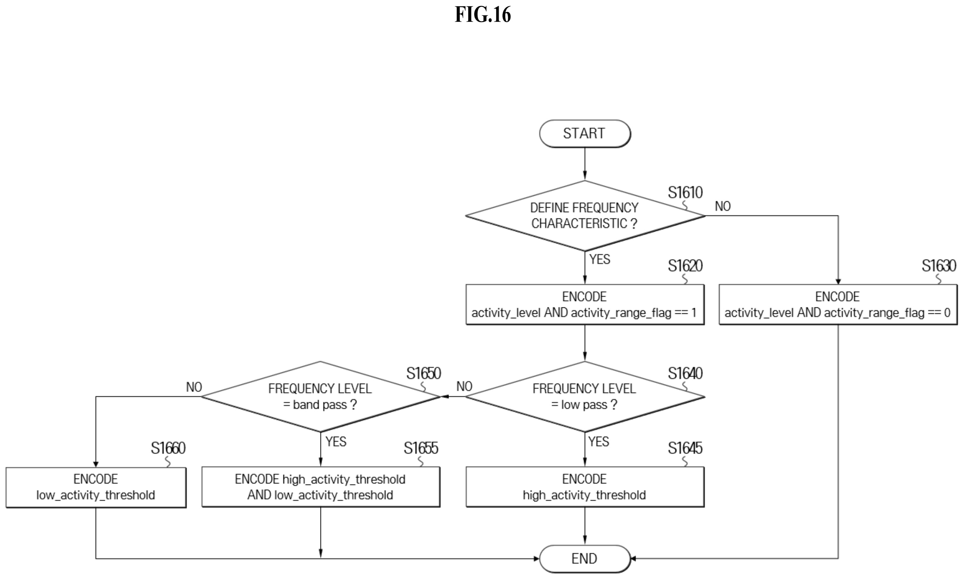

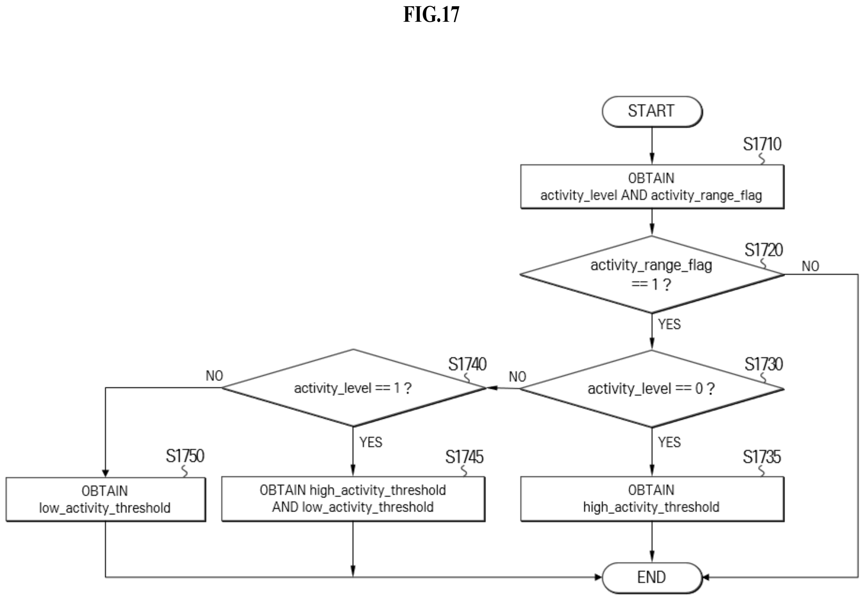

FIG. 16 is a diagram for explaining an encoding method for encoding frequency information, and FIG. 17 is a diagram for explaining a decoding method for decoding frequency information.

Referring to FIG. 16, whether frequency characteristics are defined may be determined S1610. When it is determined that the frequency characteristics are not defined, frequency level information (activity_level) and activity_range_flag == 0 may be encoded S1630. The activity_range_flag may indicate whether cut off threshold information is defined.

On the other hand, when it is determined that the frequency characteristics are defined, frequency level information (activity_level) and activity_range_flag == 1 may be encoded S1620. In this case, a frequency level may be determined based on the frequency level information S1640, S1650. When the frequency level is low pass (i.e., in case of low pass filter), a higher threshold frequency (high_activity_threshold) may be encoded S1645. When the frequency level is band pass (i.e., in case of band pass filter), a higher threshold frequency (high_activity_threshold) and a lower threshold frequency (low_activity_threshold) may be encoded S1655. When the frequency level is high pass (i.e., in case of high pass filter), a lower threshold frequency (low_activity_threshold) may be encoded S1660. The frequency level determination procedures may be sequentially performed in various orders. For example, after the process of determining whether the frequency level is low pass S1640 is first performed, the process of determining whether the frequency level is band pass S1650 may be performed when the frequency level is not low pass. However, the frequency level determination procedures may be performed in an order different from that illustrated in FIG. 16.

Referring to FIG. 17, frequency level information (activity_level) and activity_range_flag may be obtained from a bitstream S1710. When activity_range_flag == 1, a frequency level may be determined based on the frequency level information S1730, S1740. When the frequency level is low pass (i.e., in case of low pass filter), a higher threshold frequency (high_activity_threshold) may be obtained S1735. When the frequency level is band pass (i.e., in case of band pass filter), a higher threshold frequency (high_activity_threshold) and a lower threshold frequency (low_activity_threshold) may be obtained S1740. When the frequency level is high pass (i.e., in case of high pass filter), a lower threshold frequency (low_activity_threshold) may be obtained S1750. The frequency characteristics of information encoded through the bitstream may be determined based on the obtained frequency information. The procedures for determining the frequency level may be sequentially performed in various orders. For example, after the process of determining whether the frequency level is low pass S1730 is first performed, the process of determining whether the frequency level is band pass S1740 may be performed when the frequency level is not low pass. However, the procedures for determining the frequency level may be performed in an order different from that illustrated in FIG. 17.

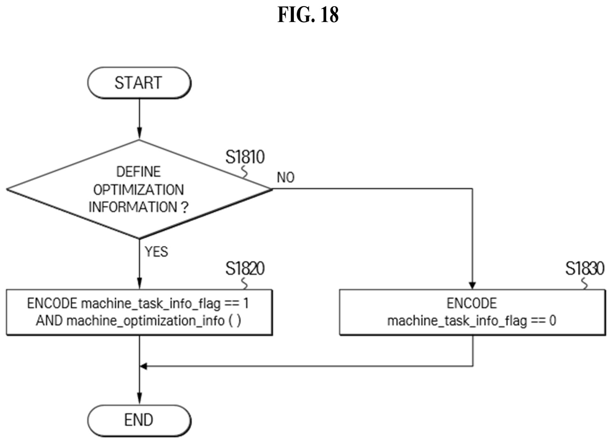

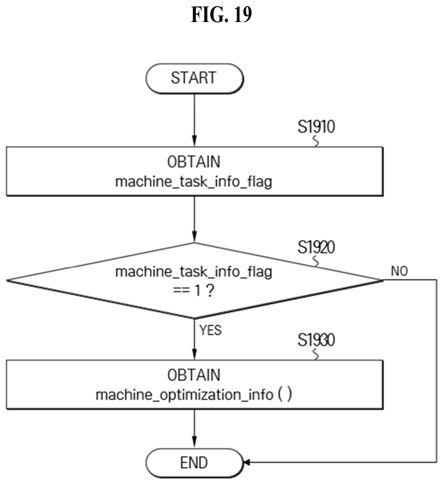

FIG. 18 is a diagram for explaining an encoding method of encoding optimization information through at least one parameter set, and FIG. 19 is a diagram for explaining a decoding method of decoding optimization information through at least one parameter set.

Referring to FIG. 18, whether optimization information is defined may be determined S1810. When it is determined that the optimization information is not defined, machine_task_info_flag == 0 may be encoded, and the optimization information may not be encoded S1830. On the other hand, when it is determined that the optimization information is defined, machine_task_info_flag == 1 may be encoded, and optimization information (machine_optimization_info) may be encoded S1820. In this case, the optimization information may have the same NAL unit type as at least one parameter set (a parameter set in which the optimization information is encoded) in the bitstream.

Referring to FIG. 19, machine_task_info_flag may be obtained from a bitstream S1910, and whether optimization information is defined may be determined based on the obtained machine_task_info_flag. When machine_task_info_flag == 1, optimization information may be obtained from a parameter set indicated by machine_task_info_flag in the bitstream S1930. When machine_task_info_flag == 0, the optimization information may not be obtained.

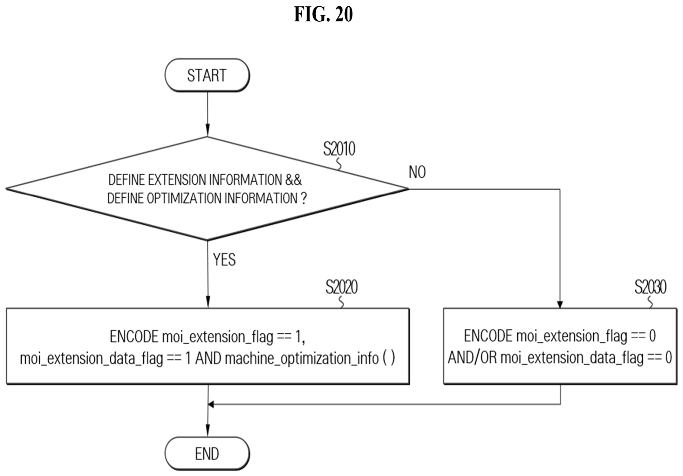

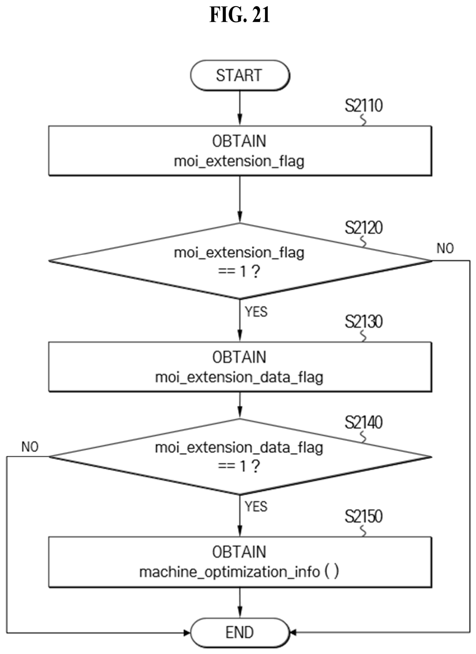

FIG. 20 is a diagram for explaining an encoding method of encoding optimization information through a dedicated NAL unit type, and FIG. 21 is a diagram for explaining a decoding method of decoding optimization information through a dedicated NAL unit type.

Referring to FIG. 20, whether optimization information is defined may be determined S2010. In step S2010, whether extension information (moi_extension_flag and moi_extension_data_flag) is defined may also be determined. When it is determined not to define the optimization information or the extension information, moi_extension_flag == 0 and/or moi_extension_data_flag == 0 may be encoded, and the optimization information may not be encoded S2030. In contrast, when it is determined to define the optimization information and the extension information, moi_extension_flag == 1 and moi_extension_data_flag == 1 may be encoded, and the optimization information (machine_optimization_info) may be encoded S2020. In this case, the optimization information may have a dedicated NAL unit type in the bitstream.

Referring to FIG. 21, moi_extension_flag may be obtained from the bitstream S2110, and the value of moi_extension_flag may be determined S2120. When moi_extension_flag == 1, moi_extension_data_flag may be obtained from the bitstream S2130, and the value of moi_extension_data_flag may be determined S2140. When moi_extension_data_flag == 1, optimization information (machine_optimization_info) may be obtained from the bitstream S2150.

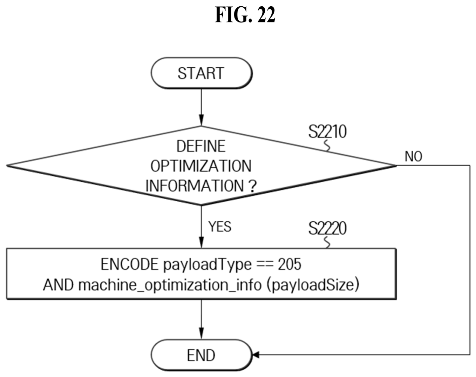

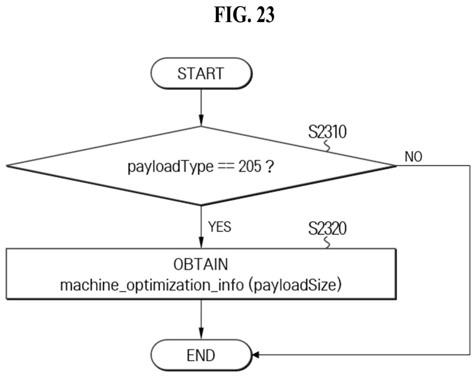

FIG. 22 is a diagram for explaining an encoding method of encoding optimization information through an SEI message, and FIG. 23 is a diagram for explaining a decoding method of decoding optimization information through an SEI message.

Referring to FIG. 22, whether optimization information is defined may be determined S2210. When it is determined not to define the optimization information, the optimization information may not be encoded. In contrast, when it is determined to define the optimization information, payloadType == a predetermined value (e.g., 205) and the optimization information (machine_optimization_info(payloadSize)) may be encoded S2220. In this case, the optimization information may have the same NAL unit type as the SEI in the bitstream.

Referring to FIG. 23, whether the payloadType is equal to a predetermined value (e.g., 205) may be determined S2310. When the payloadType is different from the predetermined value, the optimization information may not be obtained. In contrast, when the payloadType is equal to the predetermined value, the optimization information
(machine_optimization_info(payloadSize)) may be obtained from the bitstream S2320.

Although exemplary methods of the present disclosure are expressed as a series of operations for the clarity of explanation, this is not intended to limit the order in which steps are performed, and if necessary, each step may be performed simultaneously or in different order. In order to implement a method according to the present disclosure, another step may be additionally included in an exemplary step or the remaining steps may be included excluding some steps or another additional step may be included excluding some steps.

In the present disclosure, an image encoding apparatus or an image decoding apparatus performing a predetermined operation (step) may perform an operation (a step) for checking a condition or a situation for performing a corresponding operation (step). For example, when it is stated that a predetermined operation is performed when a predetermined condition is satisfied, an image encoding apparatus or an image decoding apparatus may perform an operation for checking whether the predetermined condition is satisfied, and then perform the predetermined operation.

The various embodiments of the present disclosure do not list all possible combinations, but are intended to describe the representative aspect of the present disclosure, and matters described in various embodiments may be applied independently or in a combination of at least two.

Embodiments described in the present disclosure may be implemented and performed on a processor, a microprocessor, a controller or a chip. For example, functional units shown in each diagram may be implemented and performed on a computer, a processor, a microprocessor, a controller or a chip. In this case, information (e.g., information on instructions) or an algorithm for implementation may be stored in a digital storage medium.

In addition, a decoder (a decoding apparatus) and an encoder (an encoding apparatus) to which embodiment(s) of the present disclosure are applied may be included in a multimedia broadcasting transmitting and receiving device, a mobile communication terminal, a home cinema video device, a digital cinema video device, a surveillance camera, a video communication device, a real-time communication device such as a video communication, etc., a mobile streaming device, a storage medium, a camcorder, a video-on-demand (VoD) service providing device, an OTT video (Over the top video) device, an Internet streaming service providing device, a three-dimensional (3D) video device, a virtual reality (VR) device, an augmented reality (AR) device, a video phone video device, a transportation terminal (e.g., a vehicle (including an autonomous vehicle) terminal, a robot terminal, an airplane terminal, a ship terminal, etc.), a medical video device, etc., and may be used to process a video signal or a data signal. For example, an OTT video (Over the top video) device may include a game console, a Blu-ray player, an Internet-connected TV, a home theater system, a smartphone, a tablet PC, a digital video recorder (DVR), etc.

In addition, a processing method to which embodiment(s) of the present disclosure are applied may be produced in the form of a program executed by a computer and may be stored in a computer-readable recording medium. Multimedia data having a data structure according to embodiment(s) of the present disclosure may also be stored in a computer-readable recording medium. A computer-readable recording medium includes all types of storage devices and distributed storage devices where computer-readable data is stored. A computer-readable recording medium may include, for example, a Blu-ray disc (BD), a universal serial buse (USB), ROM, PROM, EPROM, EEPROM, RAM, CD-ROM, a magnetic tape, a floppy disk and an optical data storage device. In addition, a computer-readable recording medium includes media implemented in the form of a carrier (e.g., transmission via the Internet). In addition, a bitstream generated by an encoding method may be stored in a computer-readable recording medium or may be transmitted through a wired or wireless communication network.

In addition, embodiment(s) of the present disclosure may be implemented as a computer program product by a program code, and a program code may be executed on a computer by embodiment(s) of the present disclosure. A program code may be stored on a computer-readable carrier.

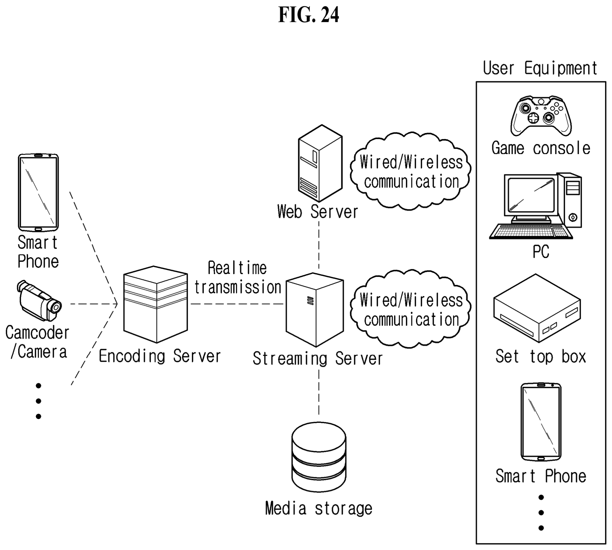

FIG. 24 is a diagram showing an example of a content streaming system to which embodiments of the present disclosure may be applied.

Referring to FIG. 24, the content streaming system to which an embodiment of the present disclosure is applied may broadly include an encoding server, a streaming server, a web server, a media storage, a user device, and a multimedia input device.

An encoding server compresses content input from multimedia input devices such as a smartphone, camera, or camcorder into digital data, generating a bitstream and transmitting it to a streaming server. As another example, when multimedia input devices such as a smartphone, camera, or camcorder directly generate a bitstream, an encoding server may be omitted.

A bitstream may be generated by an image encoding method and/or an image encoding apparatus to which an embodiment of the present disclosure is applied, and a streaming server may temporarily store a bitstream during the process of transmitting or receiving a bitstream.

A streaming server may transmit multimedia data to a user device based on a user request through a web server, and a web server may serve as an intermediary that informs a user of available service. When a user requests a desired service from a web server, a web server may send it to a streaming server, and a streaming server may transmit multimedia data to a user. In this case, a content streaming system may include a separate control server, and in this case, a control server may function to control a command/a response between devices within a content streaming system.

A streaming server may receive a content from a media storage and/or an encoding server. For example, when receiving a content from an encoding server, a content may be received in real time. In this case, to provide a seamless streaming service, a streaming server may store a bitstream for a certain period of time.

Examples of a user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, a digital signage, etc.

Each server within a content streaming system may be operated as a distributed server, in which case data received by each server may be processed in a distributed manner.

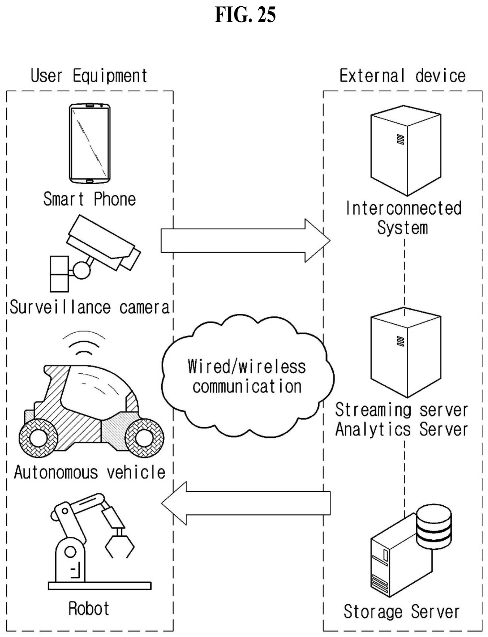

FIG. 25 is a diagram showing another example of a content streaming system to which embodiments of the present disclosure may be applied.

Referring to FIG. 25, in an embodiment such as VCM, a task may be performed by a user terminal or a task may be performed by an external device (e.g., a streaming server, an analysis server, etc.) according to the performance of a device, a user's request, the characteristics of a task to be performed, etc. In this way, in order to transmit information necessary for performing a task to an external device, a user terminal may generate directly or through an encoding server a bitstream including information necessary for performing a task (e.g., information such as a task, a neural network and/or usage).

An analysis server may perform a task requested by a user after decoding encoded information transmitted from a user terminal (or, from an encoding server). An analysis server may transmit a result obtained by performing a task to a user terminal again or to another linked service server (e.g., a web server). For example, an analysis server may transmit a result obtained by performing a task for determining a fire to a firefighting-related server. An analysis server may include a separate control server, in which case a control server may play a role in controlling a command/a response between each device associated with an analysis server and a server. In addition, an analysis server may request desired information from a web server based on information about a task that a user device wants to perform and a task that a user device may perform. When an analysis server requests a desired service from a web server, a web server may transmit it to an analysis server, and an analysis server may transmit data therefor to a user terminal. In this case, the control server of a content streaming system may play a role in controlling a command/a response between each device within a streaming system.

### [Industrial Applicability]

An embodiment according to the present disclosure may be used to encode/decode a feature/a feature map.

## Claims

1. A decoding method performed by a decoding apparatus, comprising:
obtaining optimization information for performing a task from a bitstream; and
based on the optimization information, determining at least one of a type of the task, a latency characteristic of the task, or a frequency characteristic of information encoded in the bitstream.

2. The decoding method of Claim 1, wherein the optimization information includes identification information for the task, and
wherein the type of the task is determined as a type indicated by the identification information among candidate types of the task.

3. The decoding method of Claim 1, wherein the optimization information includes an optimization flag indicating whether optimization is performed for the task, and
wherein the identification information is obtained based on the optimization flag indicating that optimization is performed for the task.

4. The decoding method of Claim 1, wherein the optimization information includes information on a latency level of the task, and
wherein the latency characteristic of the task is determined based on the information on the latency level.

5. The decoding method of Claim 4, wherein the information on the latency level includes maximum latency information and latency level information.

6. The decoding method of Claim 1, wherein the optimization information includes frequency information on the encoded information, and
wherein the frequency characteristic of the encoded information is determined based on the frequency information.

7. The decoding method of Claim 6, wherein the frequency information includes at least one of higer threshold frequency information or lower threshold frequency information.

8. The decoding method of Claim 7, wherein the frequency information further includes frequency level information of the encoded information,
wherein the lower threshold frequency information is included in the frequency information based on the frequency level information indicating a band pass filter or a low pass filter, and
wherein the higher threshold frequency information is included in the frequency information based on the frequency level information indicating a band pass filter or a high pass filter.

9. The decoding method of Claim 1, wherein the optimization information has an NAL unit type identical to at least one parameter set in the bitstream.

10. The decoding method of Claim 1, wherein the optimization information has a dedicated NAL unit type in the bitstream.

11. The decoding method of Claim 1, wherein the optimization information has an NAL unit type identical to supplemental enhancement information (SEI) in the bitstream.

12. The decoding method of Claim 11, wherein the optimization information is obtained based on a payload type (payloadType) of the SEI being a predetermined value.

13. An encoding method performed by an encoding apparatus, comprising:
determining at least one of a type of a task, a latency characteristic of the task, or a frequency characteristic of information encoded in a bitstream; and
encoding optimization information including a result of the determination into the bitstream.

14. A computer-readable recording medium storing a bitstream generated by the encoding method of Claim 13.

15. A method for transmitting a bitstream generated by an encoding method, wherein the encoding method comprises:
determining at least one of a type of a task, a latency characteristic of the task, or a frequency characteristic of information encoded in a bitstream; and
encoding optimization information including a result of the determination into the bitstream.
